# EUROPÄISCHE PATENTSCHRIFT

(11) **EP 0 879 663 B1**
(45) Veröffentlichungstag und Bekanntmachung des Hinweises auf die Patenterteilung: **21.07.2004**
(21) Anmeldenummer: 98109073.1
(22) Anmeldetag: 19.05.1998
(51) Int. Cl.: B23C 5/22

(54) **Schneidwerkzeug mit zubehörfreier Schneidenhalterung**
Cutting tool with simple insert holding
Outil de coupe avec serrage de plaquette simple

(30) Priorität: 21.05.1997 DE 19721177
(43) Veröffentlichungstag der Anmeldung: 25.11.1998
(73) Patentinhaber: RIETER AUTOMATIK GmbH, D-63757 Grossostheim (DE)
(72) Erfinder: Arnheiter, Werner, 64732 Bad König (DE)
(74) Vertreter: Patentanwälte Feldmann & Partner AG

(56) Entgegenhaltungen:
- GB-A- 316 816
- US-A- 1 340 474

## Beschreibung

Die Erfindung betrifft ein Schneidwerkzeug, insbesondere ein rundlaufendes Schneidwerkzeug, wie es bspw. zum Stranggranulieren von Kunststoffen Verwendung findet und das die Merkmale des Oberbegriffs des Patentanspruchs 1 aufweist.

Die genannten Schneidwerkzeuge weisen einen Werkzeugkörper auf, in den Schneidelemente eingesetzt sind. Dazu dienen entsprechende Aufnahmen, die die Schneidelemente sicher halten müssen. Der Sitz der Schneidelemente muß dabei so fest sein, dass die auftretenden Belastungen die Schneidelemente weder lösen noch verschieben noch in ihrem Sitz beeinträchtigen können.

Die Zerspanungsleistung eines solchen Schneidwerkzeugs ist sowohl von der Drehzahl (Schnittgeschwindigkeit) als auch von der Anzahl der an einem Werkzeugkörper gehaltenen Schneidelemente abhängig. Das Bestreben geht deshalb häufig dahin, möglichst viele Schneidelemente an einem Werkzeugkörper zu lagern. Dies bedingt, dass bei einem gegebenen Werkzeugdurchmesser der Abstand zwischen den Schneidelementen relativ gering sein soll.

Die Schneidelemente sind häufig aus einem besonders harten gelegentlich auch spröden Material gefertigt. Eine besondere Schwierigkeit stellt hier die Klemmung von Schneidelementen aus Keramik dar, die auf Druckspitzen empfindlich reagieren.

Aus der US-PS 3 987 525 ist ein Schneidwerkzeug mit den Merkmalen des Oberbegriffs des Patentanspruchs 1 bekannt. Es weist einen Werkzeugkörper auf, der zur Lagerung einzelner Schneidelemente mit etwa parallel zu der Drehachse angeordneten Nuten versehen ist. Diese sind durch zwei im spitzen Winkel zueinander stehende Planflächen begrenzt, wobei sich die jeweilige Nut nach der Öffnungsrichtung verengt. Die Nut geht bodenseitig in eine Schrägbohrung über. Die Schrägbohrung verläuft unter einem spitzen Winkel zu der Drehachse. In der Schrägbohrung sitzt unverdrehbar ein Keilbolzen, der eine den Nutboden bildende Flachseite aufweist. Der Keilbolzen liegt mit seiner Flachseite an der Bodenseite eines keilförmigen Schneideinsatzes an und drückt diesen nach außen, wenn er in die Schrägbohrung eingetrieben wird. Zum Lösen des Schneideinsatzes wird der Keilbolzen aus der Schrägbohrung herausgezogen, wozu ein spezieller Auszieher dient.

Die Länge des Keilbolzens ist geringer als die Länge des Schneideinsatzes. In gespanntem Zustand setzt der Keilbolzen etwa mittig an der Bodenfläche des Schneideinsatzes an und drückt diesen nach außen und somit wie einen Keil in die sich nach außen verengende Nut. Die freien Enden des Schneideinsatzes sind jedoch nicht unterstützt, wodurch sich in der Summe eine Biegebelastung für den Schneideinsatz ergibt. Die Druckverteilung an dem Schneideinsatz ist deshalb nicht ganz gleichmäßig, was bei Keramikeinsätzen zu Problemen führen kann. Außerdem ist der Durchmesser des Keilbolzens größer als die Bodenfläche des Schneideinsatzes. Bedingt durch den erforderlichen Abstand zwischen einzelnen Schrägbohrungen, deren Durchmesser durch den Bolzendurchmesser festgelegt ist, ergibt sich somit ein relativ großer Abstand zwischen den Schneideinsätzen d.h. eine große Zahnteilung oder umgekehrt eine geringe Zähnezahl. Dies erfordert bei gegebener Zerspanungsleistung eine hohe Drehzahl was zu Lärmbelastung und einer hohen Schnittgeschwindigkeit führt, die häufig nicht erwünscht ist.

Aus der GB-A-316'816 ist ein Schneidwerkzeug mit den Merkmalen des Oberbegriffes des Patentanspruchs 1 bekannt. Hierbei handelt es sich um einen Fräskopf mit auswechselbaren Schneiden. Die seitlichen Klemmflächen laufen sowohl in radialer als auch in longitudinaler Richtung zusammen, während die Bodenfläche parallel zur Rotationsachse des Fräskopfes verläuft.

Ausgehend von der GB-A-316'816 ist es die Aufgabe der vorliegenden Erfindung ein Schneidwerkzeug zu schaffen, das für die Eigenheiten einer Stranggranuliermaschine besonders geeignet ist.

Diese Aufgabe wird durch ein Schneidwerkzeug mit den Merkmalen des Patentanspruchs 1 gelöst.

Der Werkzeugkörper weist durch Klemmflächen begrenzte Nuten auf, die der Aufnahme der Schneidelemente dienen. Alle Klemmflächen sind dabei ortsfest an dem Werkzeugkörper ausgebildet und halten die Schneidelemente in durchgängiger Anlage. Dies wird erreicht, indem wenigstens eine der Klemmflächen bezüglich einer seitlichen Bewegung, d.h. einer Bewegung des Schneidelements in Richtung seiner Längserstreckung, als Keilfläche wirkt. Damit keilt sich das Schneidelement, wenn es seitlich in eine Aufnahme eingeführt wird, selbst in der Nut fest. Auf diese Weise werden örtliche Druckspitzen zuverlässig vermieden. Dadurch können auch relativ spröde Schneidelemente, wie bspw. Keramikschneideinsätze gehaltert werden, ohne dass örtliche Drucküberhöhungen zu Brüchen oder Rissen führen würden.

Die von den Nuten gebildeten Aufnahmen sind frei von bewegbaren Klemmelementen, wie sie bislang verwendet worden sind, um die Schneidelemente in den entsprechenden Aufnahmen festzukeilen. Dies bedeutet, dass die Abstände zwischen den Schneidelementen sehr gering gehalten werden können, was eine geringe Zahnteilung ergibt. Es können an einem Werkzeugkörper gegebenen Durchmessers sehr viele Schneidelemente befestigt werden, was eine große Zähnezahl und eine hohe Zerspanungsleistung schon bei niedrigen Werkzeugdrehzahlen ergibt. Die Schnittgeschwindigkeiten können somit bewusst niedrig gehalten werden, was sich positiv auf den Werkzeugverschleiß und die Geräuschentwicklung auswirkt.

Die Aufnahmen sind starr ausgebildet und werden durch zwei die Nut begrenzende Klemmflächen, die parallel zu einer Nutlängsrichtung verlaufend angeordnet sind, und durch eine dritte Klemmfläche definiert, die mit der Nutlängsrichtung einen spitzen Bodenwinkel einschliesst. Die Abmessungen des Schneidelementes weisen ein geringes Übermaß in Bezug auf die Abmessungen der Nut auf. Ist das Schneidelement von der Seite her in Nutlängsrichtung vollständig in die Nut eingeschoben, liegen seine Anlageflächen gleichmäßig an die entsprechenden Klemmflächen der Aufnahme angepresst an. Dabei wird (bis auf die Stirnflächen) vorzugsweise der gesamte Oberflächenbereich des in dem Werkzeugkörper sitzenden Abschnittes des Schneidelementes als Anlagefläche genutzt. Auch bei insgesamt großen Haltekräften ergibt sich somit eine gleichmäßige und geringe Druckbelastung, was umgekehrt eine besonders feste Einspannung ermöglicht.

Die Bodenfläche des Schneidelements und die Bodenfläche der Nut bilden eine Keilanordnung, die das Schneidenelement nach außen treibt, wenn dieses in die Nut eingeschoben wird. Dabei wird das Schneidelement in der sich nach außen verjüngenden Nut nach außen gedrückt und somit in dieser festgekeilt. Der Bodenwinkel ist dabei vorzugsweise relativ gering (kleiner als 5°). Bei sehr genauer Fertigung d.h. Passung zwischen dem Schneidelement und der Aufnahme kann ein sehr kleiner Bodenwinkel zur Anwendung kommen, der das Schneidenelement beim Einschieben in die Aufnahme lediglich um wenige Zehntel Millimeter nach außen treibt. Ein kleiner Bodenwinkel verbessert den Sitz des Schneidelements in der Aufnahme, wobei er vorzugsweise so bemessen ist, dass die Haftreibung zwischen dem Schneidenelement und der Nut in allen Betriebszuständen des Schneidwerkzeuges eine seitliche Verschiebung des Schneidelements verhindert.

Bedarfsweise können auch eine oder beide Flanken der Nut als Keilfläche ausgebildet sein. Jedoch wird die leicht gegen die Längsrichtung geneigte Bodenfläche bevorzugt, weil so ein in Umfangsrichtung gleichmäßig dikkes Schneidelement erhalten wird.

Die Nut wird vorzugsweise durch drei Planflächen begrenzt, die die Klemmflächen bilden. Bedarfsweise können die Klemmflächen jedoch auch anderweitig ausgebildet oder jeweils in mehrere Flächenbereiche unterteilt sein. Einer gleichmäßigen Druckverteilung kommt es jedoch entgegen, wenn die Klemmflächen unterbrechungsfrei ausgebildet sind. Dies gestattet außerdem das Erzielen einer möglichst großen Haftreibung, die das Schneidelement in der Ausnehmung sichert.

Die Spannung des Schneidelements wird letztlich dank der Elastizität des Werkzeugkörpers bzw. des Schneidelements aufrecht erhalten. Diese kann bedarfsweise bspw. durch Entlastungsbohrungen im Werkzeugkörper definiert eingestellt werden, indem bspw. Querbohrungen in dem Werkzeugkörper untergebracht werden. Wesentlich ist in jedem Falle die Genauigkeit bei der Herstellung der Aufnahmen und der Schneidelemente.

Weitere vorteilhafte Einzelheiten von Ausführungsformen der Erfindung ergeben sich aus Unteransprüchen sowie der Beschreibung und der zugehörigen Zeichnung. In der Zeichnung ist eine Ausführungsform der Erfindung dargestellt. Es zeigen:
Fig. 1 ein erfindungsgemäßes Schneidwerkzeug, in einer vereinfachten schematisierten Perpektivdarstellung,
Fig. 2 das Schneidwerkzeug nach Fig. 1, in einer schematisierten ausschnittsweisen Seitenansicht in einem anderen Maßstab,
Fig. 3 das Schneidwerkzeug nach den Figuren 1 und 2 in einer ausschnittsweisen Darstellung mit Veranschaulichung der geometrischen Verhältnisse an einem Schneidelement, in Seitenansicht und
Fig. 4 das Schneidwerkzeug nach Fig. 3, geschnitten entlang der Linie IV - IV, in einer schematischen Darstellung und in einem anderen Maßstab.

### Beschreibung

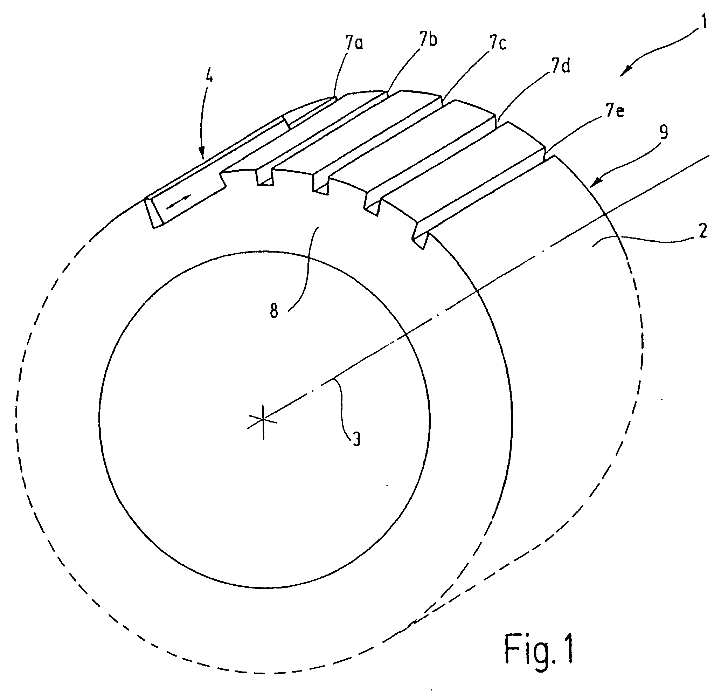

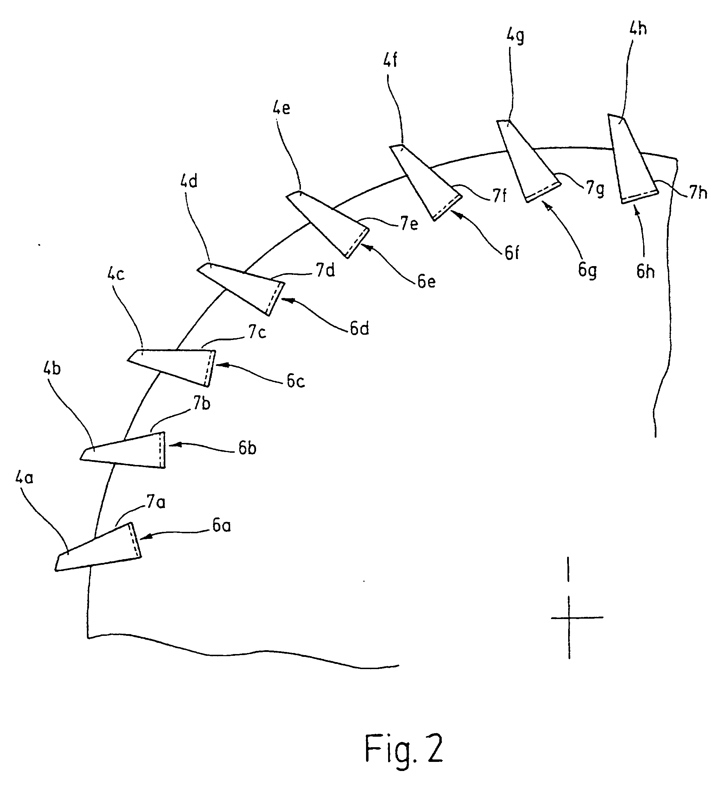

In Fig. 1 ist ein Zerspanungswerkzeug 1 veranschaulicht, wie es bspw. zum Stranggranulieren von Kunststoffen verwendet wird. Das Schneidwerkzeug 1 weist einen walzen- oder zylinderförmigen Werkzeugkörper 2 auf, der mit nicht weiter veranschaulichten Mitteln zur Befestigung an einer um eine Drehachse 3 drehbaren Arbeitsspindel versehen ist. Der Werkzeugkörper 2 trägt, wie bspw. aus Fig. 2 hervorgeht, mehrere in Umfangsrichtung voneinander gleichmäßig beabstandete Messer oder Schneidelemente 4. Die Schneidelemente 4 sind untereinander gleich ausgebildet und tragen in Fig. 2 lediglich zur Unterscheidung jeweils einen zusätzlichen Buchstabenindex. Während der Werkzeugkörper 2 bspw. aus einem zähen Stahl gefertigt ist, sind die Schneidelemente 4 aus einem besonders harten und oder verleißfesten Material wie bspw. Keramik hergestellt. Zur Halterung und Lagerung der Schneidelemente 4 ohne zusätzliche Klemm- oder Befestigungseinrichtungen dienen an dem Werkzeugkörper 2 vorgesehene Aufnahmen 6, die untereinander gleich ausgebildet sind und in den Fig. 1 und 2 lediglich unterscheidungshalber einen zusätzlichen Buchstabenindex a bis h tragen.

Die Aufnahmen 6 werden durch Nuten 7 gebildet, die im vorliegenden Ausführungsbeispiel parallel zu der Drehachse 3 an der Außenseite des Werkzeugkörpers 2 angeordnet sind. Die Nuten 7 (a bis h) sind sowohl an den beiden planen Seitenflächen 8, 9 als auch an der Außenumfangsfläche 11 des Werkzeugkörpers 2 offen. Zwischen den einzelnen Nuten 7 (a bis h) ist der einstückige Werkzeugkörper 2 durchgehend ausgebildet und weist insbesondere keine Klemmeinrichtungen mit beweglichen Teilen auf. Allenfalls können, bspw. um die Elastizität des Werkzeugkörpers 2 zu erhöhen, parallel zu den Nuten 7 Durchbrüche vorgesehen sein, die jedoch in den meisten Fällen überflüssig sind.

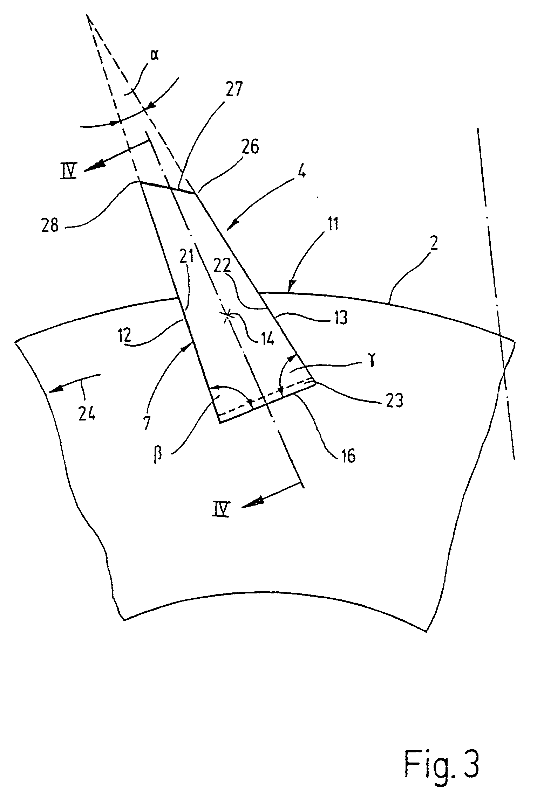

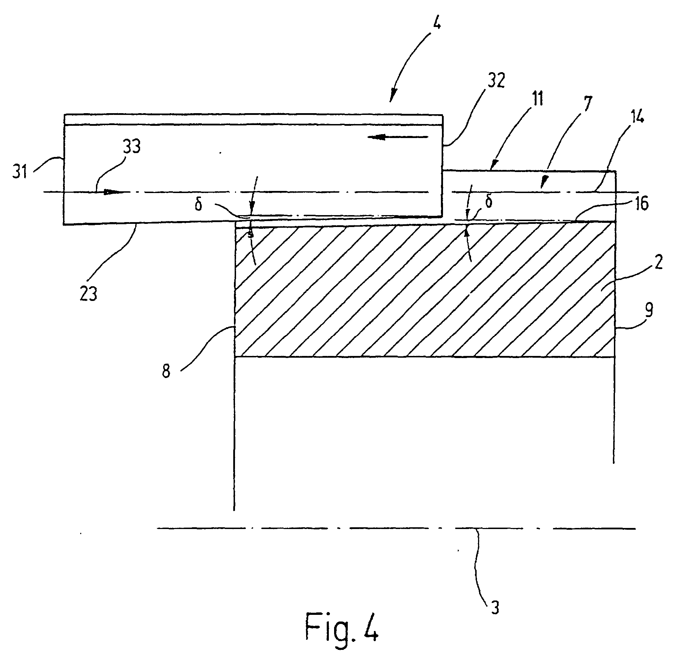

Die Nuten 7 (a bis h) sind untereinander gleich ausgebildet, wobei ihre Formgebung im Folgenden anhand der Figuren 3 und 4 am Beispiel einer einzigen Nut 7 erläutert ist. Die Nut 7 weist zwei Seitenflächen 12, 13 auf, die in Nutlängsrichtung gesehen parallel zueinander ausgerichtet sind. Die bedeutet, dass die Seitenflächen 12, 13 parallel zu einer durch die Nut laufenden gedachten Mittelachse oder Längsachse 14 ausgerichtet sind.

Beide Seitenflächen 12, 13 sind Planflächen, die miteinander einen sich in den Werkzeugkörper 2 hinein öffnenden spitzen Winkel α festlegen. Mit anderen Worten verengt sich die Nut 7 nach außen hin. Die Nut 7 weist außerdem eine Bodenfläche 16 auf, die mit den Seitenflächen 12, 13 jeweils einen spitzen Winkel β, γ einschliesst. Die Winkel β, γ sind untereinander vorzugsweise gleich groß, jedoch können sie bedarfsweise auch unterschiedlich ausgebildet sein.

Im Gegensatz zu den Seitenflächen 12, 13 ist die Bodenfläche 16 nicht parallel zu der Mittelachse 14 angeordnet, sondern, wie insbesondere auch aus Figur 4 hervorgeht, in einem spitzen Winkel δ zu dieser angeordnet, der im Größenbereich von allenfalls wenigen Grad liegt. Damit ist die Bodenfläche 16 zugleich gegen die Außenumfangsfläche 11 des Werkzeugkörpers 2 geneigt. Der Querschnitt der Nut 7 vermindert sich deshalb in Figur 4 von links nach rechts, d.h. von der Seitenfläche 8 des Werkzeugkörpers 2 zu der Seitenfläche 9. Dabei sind alle Nuten 7 so ausgebildet, dass sich ihr jeweiliger Querschnitt in der gleichen Richtung verringert. Im Einzelfall können die Richtungen jedoch auch wechseln, wobei dann allerdings unterschiedliche Schneidelemente 4 erforderlich sind. Im vorliegenden Ausführungsbeispiel sind jedoch alle Schneidelemente 4 einheitlich.

Wie aus den Figuren 2 und 3 hervorgeht, sind die Nuten 7 gegen die Radialrichtung geneigt, so dass die Schneidelemente 4 unter einen positiven Spanwinkel angestellt sind. Die Einstellung ist durch entsprechende Ausbildung des Werkzeugkörpers 2 zweckentsprechend festlegbar.

Anhand der Figuren 3 und 4 ist die Gestaltung der Schneidelemente 4 ersichtlich. Jedes Schneidelement 4 weist einen Querschnitt auf, der wenigstens im Bereich der Nut 7 mit dem Nutquerschnitt übereinstimmt. Das Schneidelement 4 ist hier von entsprechenden Anlageflächen 21, 22 begrenzt, die an den Seitenflächen 12, 13 der Nut 7 anliegen und die wie diese ausgerichtet sind. Bodenseitig ist das Schneidelement 4 mit einer Anlagefläche 23 versehen, die mit dem gleichen Winkel δ gegen die Mittelachse 14 geneigt ist wie die Bodenfläche 16 der Nut 7.

Im einfachsten Fall setzen sich die Anlageflächen 12, 13 über die Außenumfangsfläche 11 des Werkzeugkörpers 2 nach außen fort, wobei die in Drehrichtung (Pfeil 24) hinten liegende Anlagefläche 22 bei einer mehr- oder weniger verrundeten Kante 26 in eine Freifläche 27 übergeht. Diese grenzt bei einer Schneidkante 28 an die Anlagefläche 21.

Die Abmessungen der Nut 7 und des Schneideinsatzes 4 sind so aufeinander abgestimmt, dass der Schneideinsatz 4 in der Nut 7 im Pressitz gehalten ist, wenn er ganz in die Nut 7 eingeschoben ist.

Die Halterung der Schneideinsätze 4 in den Aufnahmen 6 (Nuten 7) kommt wie folgt zustande:

Wie aus Figur 4 ersichtlich, verringert sich der Querschnitt des Schneidelements 4 von seiner linksseitigen Stirnfläche 31 zu seiner rechtseitigen Stirnfläche 32 hin. Das Schneidelement 4 lässt sich deshalb mit geringem Spiel in Richtung des Pfeils 33 in die Nut 7 einführen. Noch bevor das Schneidelement 4 ganz in die Nut 7 eingeschoben ist, kommen seine Anlageflächen 21, 22, 23 mit den als Klemmflächen dienenden Seitenflächen 8, 9 sowie der ebenfalls als Klemmfläche dienenden Bodenfläche 16 der Nut 7 in Anlage. Weiterer Druck auf das Schneidelement 4 in Richtung des Pfeils 33 bewirkt nun, dass der durch die Bodenfläche 16 bzw. die Anlagefläche 23 gebildete Keil das Schneidelement 4 etwas nach außen drückt, wobei die Anlageflächen 21, 22 fest an die Klemmflächen 12, 13 angepresst werden. Dieser Druck wächst bis das Schneidelement vollständig in die Nut 7 eingeschoben ist. In diesem Stadium ist eine gleichmäßige Flächenpressung an den Anlageflächen 21, 22, 23 und den Klemmflächen 12, 13, 16 vorhanden. Das Schneidelement 4 ist an seiner gesamten in dem Werkzeugkörper 2 befindlichen Oberfläche fest eingeklemmt. Zu übertragende Kräfte werden großflächig übertragen.

Das Schneidelement 4 ist reibschlüssig in der Nut 7 gehalten. Im allgemeinen reicht die vorhandene Haftreibung aus. Bedarfsweise können zusätzliche Sicherungsmittel vorgesehen werden, die bspw. durch einen auf die Seitenflächen 8 (9) gedrückten Ring oder eine Scheibe gebildet sind. Unbedingt erforderlich ist dies jedoch nicht.

Neben der gleichmäßigen Einspannung und Druckverteilung an den Schneidelementen 4 (die deshalb auch aus relativ sprödem Material wie Keramik gefertigt werden können) ergibt sich ein weiterer Vorteil dadurch, dass zwischen den einzelnen Aufnahmen 6 keinerlei bewegliche Spannmittel vorgesehen werden müssen. Die erforderlichen Abstände zwischen den Aufnahmen 6 sind deshalb sehr gering, wodurch eine hohe Schneidenzahl und eine geringe Zahnteilung erreichbar ist. Dies ermöglicht hohe Zerspanungsleistungen bei niedrigen Drehzahlen und Schnittgeschwindigkeiten.

Abweichend von dem beschriebenen Ausführungsbeispiel, können die Nuten 7 auch schräg zu der Drehachse 3 angeordnet werden. Sie sind in diesem Fall ebenfalls gerade ausgebildet. Sind die Nuten 7 schräg angeordnet, können sie so orientiert sein, dass die beim Zerspanen entstehende Kraft auf das Schneidelement 4 dieses in Verengungsrichtung der Nut 7 drückt.

Bei Bedarf können die Schneideinsätze 4 außerhalb des Werkzeugkörpers 2 auch abweichend bspw. in Umfangsrichtung abgewinkelt oder gekröpft, geformt sein. In jedem Fall aber wird durch die Lagerung der Schneidelemente 4 in Aufnahmen 6, die frei von beweglichen Klemmelementen sind, eine sehr präzise Lagerung der Schneidelemente 4 erreicht. Dies stellt sicher, dass alle Schneidkanten 28 auf dem selben Flugkreis liegen, so dass sich eine gleichmäßige und schonende Arbeit des Schneidwerkzeugs 1 ergibt. Überlastung einzelner auf einem abweichenden Flugkreis liegender Schneidkanten wird somit vermieden.

Ein rundlaufendes Schneidwerkzeug 1 weist einen Werkzeugkörper 2 auf, in dem Schneideinsätzen 4 ohne Zuhilfenahme beweglicher Klemmelemente zubehörfrei geklemmt sind. Dazu ist der Werkzeugkörper 2 mit Aufnahmenuten 7 versehen, die sich zur Umfangsfläche 11 hin verengen. Außerdem verengen sich die Nuten 7 in Querrichtung , d.h. etwa in Richtung der Drehachse 3 des Werkzeugkörpers 2. Dies wird bspw. durch eine schräge Bodenfläche 16 erreicht. Entsprechend geformte Schneidelemente werden wie Keile von der Seite her in die Nuten 7 eingedrückt, wobei sie durch Keilwirkung flächig gespannt werden. Damit ist eine sichere, besonders einfache und präzise Halterung auch von empfindlichen Schneidelementen 4 möglich.

## Patentansprüche

1. Schneidwerkzeug (1), insbesondere rundlaufendes Schneidwerkzeug,
mit einem Werkzeugkörper (2), der wenigstens eine Aufnahme (6) für ein Schneidelement (4) aufweist, wobei zu der die Aufnahme (6) eine von dem Werkzeugkörper (2) aus gesehen sich nach außen verengende Nut (7) gehört,
mit wenigstens einem Schneidelement (4), das in die Nut (7) einsetzbar ist und an dieser lösbar befestigbar ist,
wobei
die Nut (7) durch drei jeweils paarweise miteinander einen Winkel (β, γ) einschließende Klemmflächen (12, 13, 16) begrenzt ist, die lageunveränderlich fest an dem Werkzeugkörper (2) ausgebildet sind und das Schneidelement (4) in fester Anlage halten, wobei sich der Querschnitt der Nut (7) in Richtung ihrer Längsachse (14) vermindert,
**dadurch gekennzeichnet,**
**dass** zwei der die Nut (7) begrenzenden Klemmflächen (12, 13) parallel zu einer Nutlängsrichtung (14) verlaufend angeordnet sind, während die dritte Klemmfläche (16) mit dieser Nutlängsrichtung (14) einen spitzen Bodenwinkel (δ) einschließt und dass der spitze Bodenwinkel (δ) kleiner als fünf Grad ist.

2. Schneidwerkzeug nach Anspruch 1, **dadurch gekennzeichnet, dass** die Aufnahme (6) frei von bewegbaren Klemmelementen ist.

3. Schneidwerkzeug nach Anspruch 1, **dadurch gekennzeichnet, dass** der spitze Bodenwinkel (δ) so klein ist, dass die Haftreibung zwischen dem Schneidelement (4) und der Nut (7) in allen Betriebszuständen des Schneidwerkzeugs (1) eine Verschiebung des Schneidelements (4) verhindert.

4. Schneidwerkzeug nach Anspruch 1, **dadurch gekennzeichnet, dass** die im spitzen Winkel zu der Längsrichtung (14) angeordnete Klemmfläche (16) eine Bodenfläche der Nut (7) bildet.

5. Schneidwerkzeug nach Anspruch 1, **dadurch gekennzeichnet, dass** zwei von den drei Klemmflächen (12, 13, 16) Nutflanken (12, 13) bilden, die einen sich in den Werkzeugkörper (2) öffnenden spitzen Winkel (α) einschließen.

6. Schneidwerkzeug nach Anspruch 1, **dadurch gekennzeichnet, dass** die Klemmflächen (12, 13, 16) Planflächen sind.

7. Schneidwerkzeug nach Anspruch 1, **dadurch gekennzeichnet, dass** die Klemmflächen (12, 13, 16) unterbrechungsfrei ausgebildet sind.

8. Schneidwerkzeug nach Anspruch 1, **dadurch gekennzeichnet, dass** die zwischen zwei anderen Klemmflächen (12, 13) angeordnete Klemmfläche (16) mit jeder benachbarten Klemmfläche (12, 13) jeweils einen spitzen Winkel (β, γ) einschließt oder einen spitzen und einen 90° -Grad-Winkel hat.

9. Schneidwerkzeug nach Anspruch 1, **dadurch gekennzeichnet, dass** das Schneidelement (4) ein Keramikelement ist.

## Claims

1. A cutting tool (1), in particular a rotating cutting tool,
with a tool body (2) which comprises at least one receiver (6) for a cutting element (4), wherein a groove (7) which narrows outwards seen from the tool body (2) belongs to the receiver (7),
with at least one cutting element (4) which may be inserted into the groove (7) and is releasably fastened to this
wherein
the groove (7) is delimited by three clamping surfaces (12, 13, 16) which in each case in pairs enclose an angle (β, γ) with one another and which are formed fixedly on the tool body (2) unchangeable in position and hold the cutting element (4) with in a fixed contact, wherein the cross section of the groove (7) reduces in the direction of its longitudinal axis (14)
**characterised in that**,
two of the clamping surfaces (12, 13) delimiting the groove (7) are arranged running parallel to a groove longitudinal direction (14), whilst the third clamping surface (16) encloses an acute base angle (δ) with this groove longitudinal direction (14), and that the acute base angle (δ) is smaller than five degrees.

2. A cutting tool according to claim 1, **characterised in that** the receiver (6) is free of movable clamping elements.

3. A cutting tool according to claim 1, **characterised in that** the acute base angle (δ) is so small that the static friction between the cutting element (4) and the groove (7) prevents a displacement of the cutting element (4) in all operating conditions of the cutting tool (1).

4. A cutting tool according to claim 1, **characterised in that** the clamping surface (16) arranged at an acute angle to the longitudinal direction (14) forms a base surface of the groove (7).

5. A cutting tool according to claim 1, **characterised in that** two of the three clamping surfaces (12, 13, 16) forms groove flanks (12, 13) which enclose an acute angle (α) opening into the tool body (2).

6. A cutting tool according to claim 1, **characterised in that** the clamping surfaces (12, 13, 16) are plane surfaces.

7. A cutting tool according to claim 1, **characterised in that** the clamping surfaces (12, 13, 16) are formed without interruption.

8. A cutting tool according to claim 1, **characterised in that** the clamping surface (16) arranged between two other clamping surfaces (12, 13) with each adjacent clamping surface (12, 13) in each case encloses an acute angle (β, γ) or has an acute and a 90° degree angle.

9. A cutting tool according to claim 1, **characterised in that** the cutting element (4) is a, ceramic element.

## Revendications

1. Outil de coupe (1), en particulier outil de coupe en rotation,
avec un corps d'outil (2) qui présente au moins un logement (6) pour un élément coupant (4), auquel cas une rainure (7), se resserrant vers l'extérieur vue à partir du corps d'outil (2), appartient au logement (6),
avec au moins un élément coupant (4) qui est insérable dans la rainure (7) et qui peut être fixé à la rainure de façon amovible, auquel cas
la rainure (7) est limitée par trois surfaces de serrage (12, 13, 16), ces surfaces de serrage renfermant respectivement deux à deux ensemble un angle (β, γ), ces surfaces de serrage (12, 13, 16) étant solidement formées au corps d'outil (2) de façon inamovible et tiennent l'élément coupant (4) dans une disposition fixe, auquel cas la section transversale de la rainure (7) se restreint en direction de son axe longitudinal (14), ,
**caractérisé par le fait que**
deux des surfaces de serrage (12, 13) limitant la rainure (14) sont disposées s'écoulant parallèlement en direction de la longueur de la rainure (14), tandis que la troisième surface de serrage (16) avec cette direction de la longueur de la rainure (14) renferme un angle de fond (δ) aigu et cet angle de fond (δ) aigu est plus petit que cinq degrés.

2. Outil de coupe selon la revendication 1, **caractérisé par le fait que** le logement (6) est libre d'éléments de serrage mobiles.

3. Outil de coupe selon la revendication 1, **caractérisé par le fait que** l'angle de fond (δ) aigu est si petit que le frottement par adhérence entre l'élément coupant (4) et la rainure (7), dans tous les états de fonctionnement de l'outil de coupe (1), empêche un déplacement de l'élément coupant (4).

4. Outil de coupe selon la revendication 1, **caractérisé par le fait que** la surface de serrage (16), disposée en un angle aigu par rapport à la direction de la longueur (14), forme une surface de fond de la rainure (7).

5. Outil de coupe selon la revendication 1, **caractérisé par le fait que** deux des trois surfaces de serrage (12, 13, 16) forment des flancs de rainure (12, 13) qui renferment un angle aigu (α) s'ouvrant dans le corps d'outil (2).

6. Outil de coupe selon la revendication 1, **caractérisé par le fait que** les surfaces de serrage (12, 13, 16) sont des surfaces planes.

7. Outil de coupe selon la revendication 1, **caractérisé par le fait que** les surfaces de serrage (12, 13, 16) sont formées de façon ininterrompue.

8. Outil de coupe selon la revendication 1, **caractérisé par le fait que** la surface de serrage (16) disposée entre deux autres surfaces de serrage (12, 13) renferme respectivement un angle aigu (β, γ) ou a un angle aigu et un angle à 90 degrés avec chaque surface de serrage adjacente (12, 13).

9. Outil de coupe après l'exigence 1, **caractérisé par le fait que** l'élément coupant (4) est un élément en céramique.
